# EUROPEAN PATENT SPECIFICATION

(11) **EP 2 976 469 B1**
(45) Date of publication and mention of the grant of the patent: **03.09.2025**
(21) Application number: 14769609.0
(22) Date of filing: 20.03.2014
(51) Int. Cl.: E03B 1/04, A47L 15/42

(54) **A WAREWASHING MACHINE WITH AN AUXILIARY GRAY WATER SOURCE DEVICE FOR COMMERCIAL KITCHENS, AND A METHOD FOR INSTALLING**
SPÜLMASCHINE MIT EINER HILFSQUELLENEINRICHTUNG FÜR GRAUWASSER FÜR GEWERBLICHE KÜCHEN UND VERFAHREN ZUR INSTALLATION
MACHINE À LAVER LA VAISSELLE AVEC DISPOSITIF AUXILIAIRE DE SOURCE D'EAU GRISE POUR CUISINES COMMERCIALES, ET PROCÉDÉ D'INSTALLATION

(30) Priority: 21.03.2013 US 201313815995; 14.03.2014 US 201414211332
(43) Date of publication of application: 27.01.2016
(73) Proprietor: Seven Hour Drive, LLC, Irvine, CA 92612 (US)
(72) Inventor: LEE, Eduardo, Yong, Irvine, CA 92612 (US); DICKENSON, Daniel, John, Laguna Niguel, CA 92677 (US)
(74) Representative: Murgitroyd & Company
(86) International application number: PCT/US2014/031368
(87) International publication number: WO 2014/153475

(56) References cited:
- EP-A1- 1 683 904
- EP-A1- 2 072 000
- CA-A1- 2 626 171
- DE-A1- 10 046 347
- DE-A1- 4 330 395
- US-A- 4 064 836
- US-A- 4 134 833
- US-A- 4 776 359
- US-A- 5 251 346
- US-A1- 2005 103 717
- US-A1- 2007 023 069
- US-B1- 6 702 942
- US-B2- 7 954 913
- "Glass-MateTM Cartridges.", PARKER HANNAFIN, 2007, XP055287788, Retrieved from the Internet <URL:http://www.parker.com/literature/Process%20Advanced%20Filtration% 20Division/PAFD _literature/Single%20sheets/GlassMate%20C2041.pdf> [retrieved on 20140827]

## Description

### CROSS-REFERENCE TO RELATED APPLICATION

This application is a continuation-in-part application of U.S. Application No. 13/815,995, filed March 21, 2013.

### FIELD OF THE INVENTION

The present invention generally relates to commercial warewashing facilities. More particularly, the present invention relates to an auxiliary apparatus designed to provide a replenishing gray water source for use by a pre-rinse station prior to a warewashing machine in such facilities.

### BACKGROUND OF THE INVENTION

The food service industry needs to manage the high number of soiled dishes encountered on a daily basis. The food service industry includes restaurants and numerous institutional food service establishments present in schools, prisons, municipal buildings, military mess halls, and the like.

In such food service industry establishments, the warewashing process typically begins with scraping of dishes into a garbage can or other refuse container. Scraping is performed to remove the larger scraps of food and the like. Following scraping, pre-rinse sprayers are used to rinse the dishes prior to placement of the dishes into commercial warewashing machines.

The commercial warewashing machine market is different that of most other commercial food service equipment markets. Warewashing machines often are not owned by the individual restaurant or food service operator. Rather, warewashing machines are leased to the individual restaurant or food service operator by a chemical sales company. As a term of many leases, the food establishment is not able to modify, service or repair the warewashing machine. Rather, the food establishment is simply able to use the machine to wash the dishes.

CA 2626171 describes a greywater recycling system for household use that accepts and purifies the water by filtering out most particulates, irradiates soap scum to disinfect it, and passes the water through a chlorination tank. In that greywater recycling system, an outlet of a dishwasher is connected to a greywater collector downpipe connecting with a filter adjacent of an inlet of a greywater collector tank, the grewater collector tank comprising a fresh water inlet, an overflow line connected to a drain pipe, and a discharge line having a pump.

US 5251346 describes a gray water recycling system that includes a control and reservoir unit for storing gray water received from a sink drain, and pumping it to a household toilet. The unit houses a pump, flow signals, filters, and an overflow.

### SUMMARY OF THE INVENTION

Commercial warewashing machines come in several different configurations. One of the configurations is a fill-and-dump machine. In such machines, the water is dumped after each wash. One example of such a machine is the ES2000 Dishmachine by EcoLab. In the ES2000 Dishmachine, between 3.8 and 18.9 litres (one and five gallons) of used dishwashing water is dumped into a drain following each wash cycle. This dishwashing water comprises a plurality of soaps and rinsing agents.

One aspect of the present invention involves the recognition that it is desired to save both water and gas/electric while not significantly modifying a warewashing machine. Accordingly, certain features, aspects and advantages of the present invention provide for an auxiliary device that is separate of a commercial warewashing machine but that can capture some or all of the used dishwashing water for use with a pre-rinse station. In some configurations, the auxiliary device can capture the used dishwashing water without substantial modification of the commercial warewashing machine.

Certain features, aspects and advantages of the present invention provide for a method of installing an auxiliary device that is separate of a commercial warewashing machine but that can capture some or all of the used dishwashing water for use with a pre-rinsing station.

In accordance with an aspect of the present invention, a warewashing station comprising a warewashing machine and an auxiliary grey water supply device for use in a commercial food service facility as defined in claim 1 is provided. The auxiliary grey water supply device comprises a tank. The tank comprises an inlet. The inlet receives a removable scrap trap. The tank further comprises an overflow outlet and a freshwater supply inlet. The overflow outlet is vertically lower than the freshwater supply inlet. A pump has an inlet in fluid communication with the tank and an outlet in fluid communication with a delivery conduit.

In accordance with another aspect of the present invention, a method of installing an auxiliary grey water supply device as defined in claim 11 is provided. The method comprising disconnecting a pre-rinse unit from a hot water faucet and a cold water faucet, locating the auxiliary grey water supply device proximate a warewashing station, connecting a delivery conduit to the hot water faucet and the cold water faucet and positioning an inlet of the auxiliary grey water supply device vertically below an outlet from a warewashing machine whereby a tank of the auxiliary grey water supply device captures substantially all of a load of grey water being evacuated from the warewashing machine through the inlet of the auxiliary grey water supply device without significant modification of the warewashing machine.

### BRIEF DESCRIPTION OF THE DRAWINGS

These and other features, aspects and advantages of the present invention will now be described with reference to the drawings of a preferred embodiment, which embodiment is intended to illustrate and not to limit the invention, and in which figures:
Figure 1 is a perspective view of a typical commercial warewashing station;
Figure 2 is a perspective view of an auxiliary device that can be used with the commercial warewashing station of Figure 1;
Figure 3 is a rear view of the auxiliary device of Figure 2; and
Figure 4 is a perspective view of a tank and a fine scrap trap of the auxiliary device of Figure 2.

### DETAILED DESCRIPTION OF THE PREFERRED EMBODIMENT

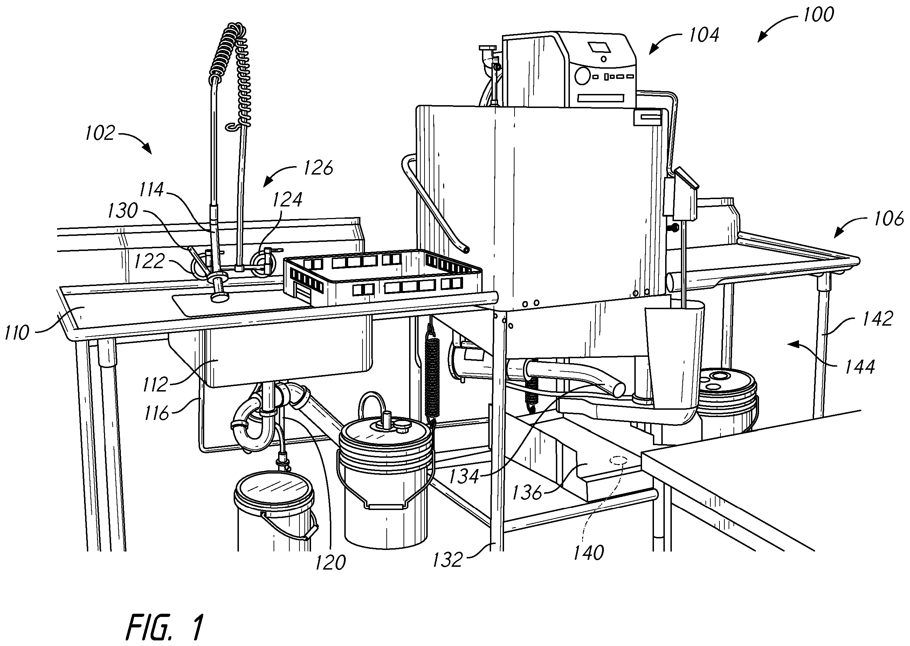

With reference now to Figure 1, a typical commercial warewashing station 100 will be introduced. The station 100 can include three main regions. The first region can include a pre-rinse station 102. Following the pre-rinse station is a second region that includes a warewashing machine 104. The third region, which is downstream of the first and second regions, can include an air-drying table 106.

In the illustrated configuration, the station 100 is laid out in a straightthrough configuration. In some configurations, the station 100 can be L-shaped or U-shaped. In some configurations, the station 100 has a counter depth of 0.610 meter (24 inches). These differing configurations can result in variations of certain features, aspects and advantages of the present invention, as will be explained below. In other words, some of the components can be relocated to better facilitate access to those components, such as spigots, faucets, valves and scrap traps, for example but without limitation.

With continued reference to Figure 1, the pre-rinse station 102 comprises a table 110. A sink 112 can be mounted to the table 110. A pre-rinse unit 114 can be positioned generally above the sink 112. The pre-rinse unit 114 can be connected to one or more of a hot water supply 116 and a cold water supply 120. The hot water supply 116 and the cold water supply 120 can comprise a hot water faucet 122 and a cold water faucet 124. Generally, the pre-rinse unit 114 will comprise an inlet 126 that will be connected to at least one of, and typically both of, the hot water faucet 122 and the cold water faucet 124. The pre-rinse unit 114 also can include a valve 130 to control the flow out of the pre-rinse unit 114. When the valve 130 is actuated, flow from the hot water supply 116 and the cold water supply 120 can pass through the hot water faucet 122 and the cold water faucet 124, through the pre-rinse unit 114 and into the sink 112.

The warewashing machine 104 can have any suitable configuration. In some configurations, the warewashing machine 104 can be a machine, such as the ES2000 by EcoLab. Because certain features, aspects and advantages of the present invention involve providing an auxiliary device to the warewashing machine 104 without significant modification to the warewashing machine 104, the warewashing machine 104 will not be described in detail.

The illustrated warewashing machine 104 is supported by a frame 132. Any suitable support or frame 132 can be used so long as access is available to an outlet 134 from the washing chamber (not shown). In the illustrated configuration, the outlet 134 is positioned generally above a scrap trap 136. The scrap trap 136 can comprise a perforated tray that serves to separate larger food waste and the like from water emitted through the outlet 134. Water that has passed through the scrap trap 136 flows through a drain outlet 140 that can be plumbed to the nearest floor sink or the like. The drain outlet 140 can be connected to the floor sink or the like using a conduit, for example but without limitation.

When the warewashing machine 104 is in use, the warewashing machine 104 is supplied fresh water and pre-rinsed dishes to wash as a batch. Upon completion of a wash cycle, the warewashing machine 104 dumps the used wash water (i.e., the gray water) through the outlet 134, onto the scrap trap 136 and ultimately through the drain outlet 140, which is plumbed to the city sewer system. The amount of gray water disposed can vary depending upon the make and model of the warewashing machine in use. In some configurations, the warewashing machine 104 can emit between 3.8 and 18.9 litres (between one and five gallons) one and five gallons per cycle.

The air-drying table 106 can have any suitable configuration. In some configurations, the air-drying table 106 includes a frame 142. The frame 142 can have an open configuration to define an open racking area 144. In some configurations, the frame 142 can be positioned above the floor sink, floor drain or the like.

### Auxiliary Device for Capture of Gray Water

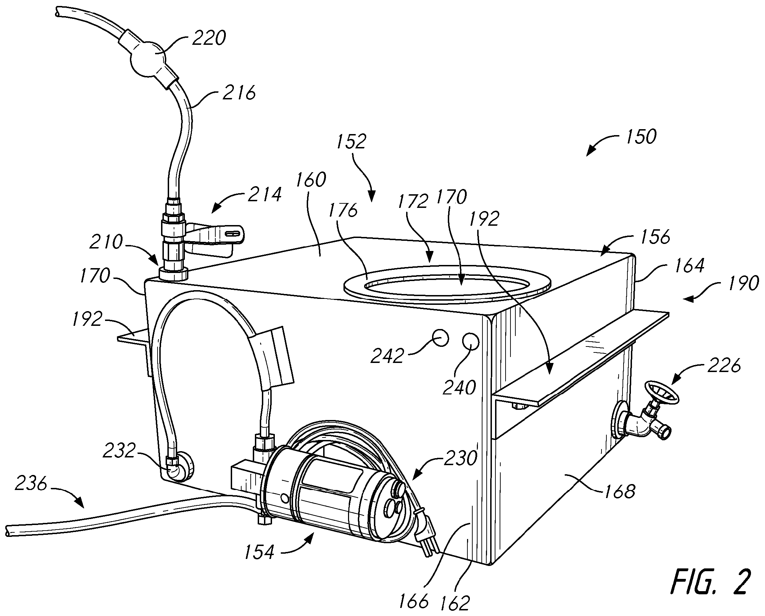

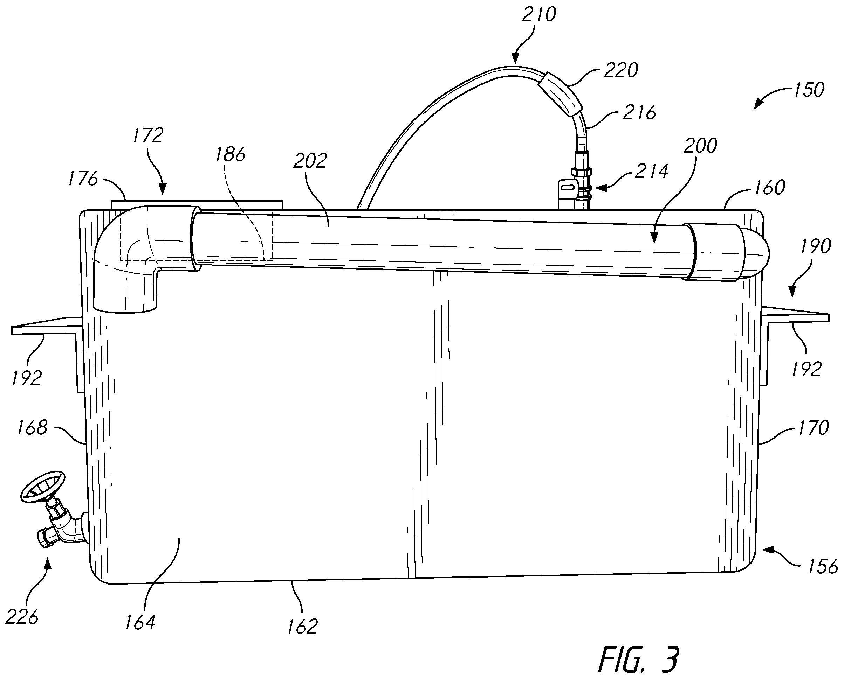

An auxiliary device 150 that is arranged and configured in accordance with certain features, aspects and advantages of the present invention is shown in Figures 2 and 3. The auxiliary device 150 captures the gray water being emitted from the warewashing machine 104. The auxiliary device 150 can supply the captured gray water to the pre-rinse station 102. The grey water captured by the auxiliary device 150 has been sanitized, softened and soaped during the wash cycle of the warewashing machine 104.

The auxiliary device 150 is separate of the warewashing machine 104 and is not permanently connected to the warewashing machine 104. The auxiliary device 150 is adapted to be fluidly connected to the warewashing machine 104 through an air gap. The air gap is defined between the outlet 134 and the inlet into the auxiliary device 150 with no physical components interposed there between. In other words, the air gap is positioned between the outlet and the inlet. The air gap can be more than about 2 times the effective inner diameter of the outlet pipe of the warewashing machine 104. In some configurations, the air gap can be between 2 and 3 times the effective inner diameter of the outlet pipe of the warewashing machine 104.

Broadly speaking, the auxiliary device 150 can include a holding portion 152 and transfer portion 154 that is in fluid communication with the holding portion 152. The holding portion 152 receives and collects the gray water. The transfer portion 154 conveys the grey water from the holding portion 152 to the pre-rinse station 102.

With reference now to Figure 2, the holding portion 152 of the auxiliary device 150 generally comprises a tank 156. The tank 156 can be formed from any suitable materials keeping in mind that the tank will handle grey water that is at least about 319.3 K (115 °F). In some instances, the tank 156 will handle grey water that is between about 322 and 333.2 K (120 - 140 °F). Preferably, the tank 156 is formed of a material that can tolerate temperatures below about 360.9 K (190 °F) (rinse water at temperatures of 363.2 K (194 °F) and above is believed to simply cook food onto the surface of the dishes being washed).

In some configurations, the tank 156 can be formed of a material that is at least partially translucent. In some configurations, the tank 156 is formed of a material that is sufficiently translucent to provide visual confirmation of the contents of the tank 156. Moreover, the tank 156 preferably is formed of a material that admits light into the tank 156 to facilitate cleaning and drying of the tank 156 at the end of a day. The tank 156 can be formed of a material, such as polystyrene, that can provide easy formation of the tank 156. In some configurations, the tank 156 can be formed of a material that incorporates recycled materials, such as recycled plastic bottles, for example but without limitation.

Using a plastic material to form the tank 156 can provide insulating properties. In addition, the thickness of the walls can help insulate the tank 156. For example, as will be explained, a pump including a pump motor may be secured to the tank 156 and, therefore, forming the tank 156 of a plastic-based material will reduce motor vibrations and reduce or eliminate the need for an isolator or damper to be positioned between the tank 156 and the pump motor. In addition, as discussed above, the tank desirably can handle water having elevated temperatures and, therefore, being somewhat insulating is desired to help retain the heat in the grey water for use in pre-rinsing operations.

The tank 156 can have any suitable shape, size and configuration. Given a counter depth of about 0.610 m (24 inches). the tank preferably extends front to rear a total of less than the counter depth (i.e., 0.610 m (24 inches)) but other dimensions are possible. In some configurations, the shape and sizing of the tank 156 is less important than the internal volume of the tank 156. For example, in some configurations, the tank 156 is designed to retain a full release of wash water from the warewashing machine 104 and the warewashing machine 104 releases about 5.3 litres (1.4 gallons) per cycle. Thus, in such configurations, the tank 156 is sized and configured to define an internal volume of at least about 5.3 litres (1.4 gallons). The outer dimensions of the tank 156 also can be determined based upon a desire to position the tank under one or more of the pre-rinse station 102, the warewashing machine 104 and the air-drying table 106. For instance, in applications in which the tank 156 will be positioned directly below the warewashing machine 104, the vertical height can be selected based upon the required height when the width and depth of the tank 156 are specified to fit within the frame 132 of the warewashing machine 104. Similarly, in applications in which the tank 156 will be positioned under the air-drying table 106, the width of the tank may be greater than the width when the tank 156 is designed to be placed below the warewashing machine 104 due to the difference in the configuration of the frame 142 of the air-drying table 106 relative to the frame 132 of the warewashing machine 104. As such, the height of the tank 156 may be reduced in such applications.

The illustrated tank 156 comprises a top 160, a bottom 162, and at least one sidewall that extends generally between the top 160 and the bottom 162. In the illustrated configuration, the tank 156 includes a front wall 164, an opposing rear wall 166, a left wall 168 and an opposing right wall 170. To facilitate cleaning, the internal junctures of two or more walls, especially the junctures of the side walls 164, 166, 168, 170 with the bottom 162, are radiused to reduce the occurrence of tight corners that can be difficult to clean and/or dry.

With reference still to Figure 2, a fine scrap trap 172 can be assembled to the tank 156. In some configurations, the fine scrap trap 172 defines a basket. As described above, the tank 156 captures water from the warewashing machine 104. While the warewashing machine 104 may include a scrap trap (e.g., scrap trap 136) of its own, the fine scrap trap 172 can be interposed between the drain outlet 140 of the warewashing machine 104 such that the grey water has already been filtered once or can be interposed between the outlet 134 of the warewashing machine 104 such that the fine scrap trap 172 performs as a primary scrap trap for the system. Because of the difference in the ultimate treatment of the grey water (i.e., from the drain outlet 140, the water goes to the city sewer system; from the tank 156, the water goes to the pre-rinse station 102), the fine scrap trap 172 advantageously is configured to limit or eliminate the infiltration of finer particles (e.g., tomato skins, rice, etc.) that could clog the pre-rinse station 102. In some applications, the fine scrap trap 172 incorporates a mesh (e.g., a stainless steel mesh). In some applications, the mesh has sufficiently small openings such that almost no rice can pass through the mesh intact.

In the illustrated configuration, the tank 156 includes an opening 174. The opening 174 can have any suitable size and configuration. In the illustrated configuration, the opening 174 is sized to be more than two times the inner effective diameter of the drain outlet 140 of the warewashing machine 140. The opening receives the fine scrap trap 172. To facilitate capture of the grey water, the opening 174 can be in the top surface 160 of the tank 156. In some configurations, the opening can be encircled by a splash curb or the like (e.g., an upwardly extending protrusion); the splash curb can contain and control splashing of water that may be caused by the velocity of the water emitted from the drain outlet 140 or the outlet 134 when the water hits the fine scrap trap 172.

The fine scrap trap 172 can be sized and configured to cooperate with the opening 174 in the tank 156. In some configurations, the opening 174 can be configured such that the fine scrap trap 172 can be formed as a tray. Forming the fine scrap trap 172 as a tray that slides generally transverse to the direction of water flow (e.g., providing a fine scrap trap drawer) can improve access to the fine scrap trap 172; providing a scrap trap 172 that inserts from the top, however, simplifies construction and reduces a need to seal around the fine scrap trap 172. In some configurations, the fine scrap trap 172 can be configured to directly underlie an existing scrap trap tray of the warewashing machine 104. Such a configuration provides for enhanced filtration while providing a more compact construction.

In the illustrated configuration, the fine scrap trap 172 is sized and configured for insertion into a cavity defined by the tank 156 through the opening 174 in the top 160. The illustrated fine scrap trap 172 is generally cylindrical. The fine scrap trap 172 can comprise an upper flange 176 that extends laterally outward from a side wall 180 of the fine scrap trap 172. The upper flange 176 can support the fine scrap trap 172 when it has been inserted into the opening 174 in the tank 156. The side wall 180 can comprise one or more support members 182 that can define a general shape for the side wall 180. A fine mesh or other suitable material 184 can be used form the balance of the side wall 180. A similar construction also can be used to form a bottom 186 of the fine scrap trap 172.

The illustrated fine scrap trap 172 is sized and configured to be recessed into the tank with the bottom 186 of the fine scrap trap 172 being vertically lower than the top 160 of the tank 156. In some configurations, the bottom 186 of the fine scrap trap 172 can be positioned vertically higher than a high-water level of the tank (which can be controlled by an overflow outlet, as will be discussed). By recessing the bottom 186 (or other surface that may cause splashing when contacted by the water emitted from the warewashing machine 104), splashing can be at least partially contained. Splashing of water out of the tank 156 is desired to be minimized or eliminated because such splashing of water will required clean-up at the end of operations and, in many installations, the warewashing machine 104 will be in the way during clean-up, which causes clean-up to be more difficult.

In some configurations, the fine scrap trap 172 can incorporate one or more splash reduction features. For example, but without limitation, the fine scrap trap 172 can include a cone or other flow spreading device positioned within the fine scrap trap 172 or forming at least a portion of the fine scrap trap 172. In some configurations, the bottom 186 of the fine scrap trap 172 can be conical downward or frustoconical downward. The feature can be formed of mesh or can be a solid flow diffusing component. The splash reduction feature or features can help slow the rush of water toward the bottom of the fine scrap trap, which can reduce the splashing experienced when the water contacts the bottom of the fine scrap trap 172.

With reference again to Figures 2 and 3, the illustrated auxiliary device 150 can include support features 190. In the illustrated configuration, the support features 190 can include rails 192 that are mounted to the tank 156. The rails 192 can be mounted to, or formed as a part of, two or more of the front, rear, left and right walls 164, 166, 168, 170. The rails 192 can be used to fit to existing structures of the warewashing machine 104 (e.g., parts of the frame 132) or to existing structures of the air-drying table 106. Thus, such a configuration provides for a compact mounting arrangement. In some configurations, however, casters, leveling feet, a support superstructure or the like can be provided to support the tank and can define support features 190. For example, leveling feet can be provided under or alongside of the tank 156. The leveling feet would allow for the leveling of the tank to reduce the likelihood of extreme floor pitches causing issues with water level maintenance while still allowing for portability of the auxiliary device 150 when empty for purposes of cleaning the auxiliary device 150 and the surrounding area.

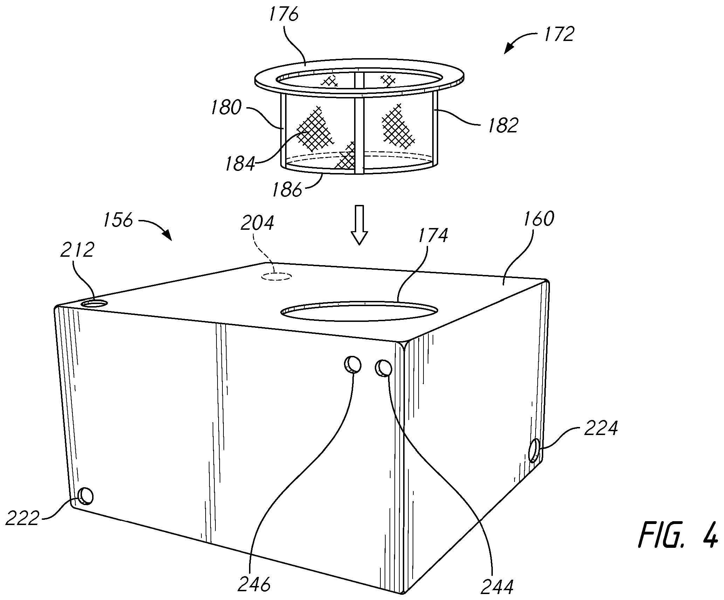

With reference to Figure 3, a water level control assembly 200 is shown. The water level control assembly 200 can define an overflow outlet for the tank 156. The tank 156 can include an outlet aperture 204 (see Figure 4), the bottom of which can correlate to the highest desired water level. In the illustrated configuration, outlet conduit 202 can be mounted to the outlet aperture 204 to direct any overflow through the outlet conduit 202 to a suitable drain location (e.g., a drain in a floor sink or a floor drain). The illustrated configuration advantageously obviates any need for a pump, any sensors or other mechanical components to maintain the water level below a predetermined level. The outlet conduit 202 preferably terminates at least 0.025 meter (1 inch) from the top of any floor sink or floor drain; such a location can reduce splashing while providing sufficient clearance to clean the floor or floor sink. Other configurations are possible.

In the illustrated configuration, the outlet aperture 204 can extend through at least one of the sidewalls (e.g., the front, rear, left and right walls 164, 166, 168, 170) to the outlet conduit 202. In some configurations, the bottom 186 of the fine scrap trap 172 can define a generally horizontal plane that generally intersects or is positioned vertically higher than the outlet aperture 204. In some less desired configurations, the bottom 186 of the fine scrap trap 172 can define a generally horizontal plane that is vertically lower than any portion of the outlet aperture, but such configurations allow the contents of the fine scrap trap 172 to float when the water level is at the high water level defined by the water level control assembly 200.

With reference again to Figure 2, the auxiliary device 150 can include a fresh water supply assembly 210. The fresh water supply assembly 210 can be configured to allow the addition of fresh water to the tank 156 as needed or desired. For example, at the start of each work day, the tank 156 will not have a supply of grey water for use by the pre-rinse station 102 and the fresh water supply assembly 210 can be used to provide an initial priming of the system for the first load of dishes of the day. Moreover, when pre-rinsing overly soiled dishes, it may be necessary to use more than the volume of grey water supplied by the warewashing machine 104; in such instances, the fresh water supply assembly 210 can provide makeup water.

The fresh water supply assembly 210 can be in fluid communication with the cavity of the tank 156 through a fresh water supply opening 212 (see Figure 4). In some configurations, the opening 212 is positioned vertically higher than the overflow aperture 204. In some configurations, the opening 212 is positioned vertically higher than the overflow aperture by at least 2 times the diameter of the opening 212 and/or 2 times an inner diameter of any flow path connected to the opening 212. In the illustrated configuration, the opening 212 is positioned along the top 160 of the tank 156. In any event, given the relative vertical positioning of the opening 212 and the overflow aperture 204, the water level in the tank 156 is unlikely to allow grey water to flow upwardly into the fresh water supply through the fresh water supply assembly 210.

In the illustrated configuration, the fresh water supply assembly 210 can include a control valve 214 that can be manually manipulated to control the flow of fresh water through a supply conduit 216 into the tank 156. In some configurations, a backflow prevention device 220 can be integrated into or coupled with the supply conduit 216. The backflow prevention device 220 can have any suitable configuration and can help to further reduce the risk of any contamination by the grey water.

With reference to Figure 4, a first outlet 222 from the tank 156 is illustrated. The outlet 222 advantageously is positioned generally vertically below the fresh water supply assembly 210, which increases the likelihood of rapid availability of water under low water conditions. Other locations also are possible. Moreover, the location of the fresh water supply assembly 210 can be varied depending upon the construction and layout of the warewashing station 100. In other words, it is helpful to have easy access to the control valve 214 and, for at least this reason, the location of the fresh water supply assembly 210 may vary depending upon the application.

With reference still to Figure 4, the tank 156 also includes a second outlet 224. One or both of the first and second outlets 222, 224 can extend through the bottom 162 of the tank 156 or one or more of the sides (e.g., front, rear, right and left walls 164, 166, 168, 170). Desirably, the first and second outlets 222, 224 are sufficiently low relatively to an inner bottom of the tank 156. As will be described, the first outlet 222 is fluidly connected to a supply pump while the second outlet 224 is fluidly connected to a drain valve. Thus, the first outlet 222 benefits from a low position because it increases the available water for use and the second outlet 224 benefits from a low position because it helps to more fully drain the tank 156 at the end of operations.

In some configurations, the inner bottom surface of the tank 156 is generally planar but, in some configurations, the inner bottom surface of the tank 156 can include features to help direct flow to one or both of the first and second outlets 222, 224. For example, in some configurations, a triangle, a pyramid, a cone or the like can be positioned to cause the water to move toward the sides of the tank 156. In one configuration, the inner bottom surface slopes gently toward the second outlet 224 throughout the bottom of the tank 156 because the second outlet 224, which can define an evacuation outlet, is used to substantially fully drain the tank 156 while the first outlet 222 supplies a pump and, therefore, should be fully or substantially submerged during operations and, if not, the fresh water supply assembly 210 can be used to augment the water supply within the tank 156.

With reference to Figure 2, a spigot 226 can be connected to the tank 156 at the second outlet opening 224. The spigot 226 can be used at the end of operations to drain the grey water from the tank. Accordingly, the sizing of the spigot 226 can be determined, at least in part, by the desired flow rate for emptying the tank 156 at the end of operations. In some configurations, a hose can be used to direct the flow to a floor drain or a floor sink. In some configurations, a bucket can be used to transfer the remnants from the tank 156 via the spigot 226. Other suitable configurations also can be used.

A pump 230 can be supported by the auxiliary device 150. The pump 230 in the illustrated configuration is mounted to the tank 156. More particularly, in the illustrated configuration, the pump 230 is mounted to one of the side walls of the tank 156. The pump 230 can be secured using four fasteners, which allows for rapid replacement and exchange if desired.

The pump 230 can have any suitable configuration. In one configuration, the pump 230 can provide a maximum flow rate of about 7.6 litres (2 gallons) per minute and a pressure of 4.1 bar (60 psi). In one configuration, the pump is a FLOJET model number D3835B5011A. The pump 230 preferably is configured to run only on demand. In other words, the pump 230 does not run unless the pre-rinse unit 114 is being used. Other pumps and other configurations can be used. The illustrated configuration is advantageously simple in construction in that no floats or other components are used to indicate or ameliorate a low water condition; rather, the pump 230 simply ingests air with the water and sputtering at the pre-rinse unit 114 will indicate a need for additional water.

A fitting 232 can be used to join a supply conduit 234 to the first outlet 222. In other words, a first end of the supply conduit 234 can be connected to the first outlet 222 with the fitting 232. A second end of the supply conduit 234 can be connected to an inlet of the pump 230. In some configurations, a screen or other filter can be disposed at the inlet of the supply conduit 234, at the outlet of the supply conduit 234 or both. The supply conduit 234 can be a braided conduit or can have any other suitable configuration.

An outlet of the pump 230 can be connected to the inlet 126 of the pre-rinse unit 114. In some configurations, a delivery conduit 236 extends from the outlet of the pump 230 to the inlet 126 of the pre-rinse unit 114. The delivery conduit 236 can include a first length that extends to a tee fitting and two lengths that connect the tee fitting to the portions of the pre-rinse unit 114 that otherwise would connect to the hot water faucet 122 and the cold water faucet 124 respectively. By connecting to both portions of the pre-rinse unit 114, it is possible for the pump 230 to pressurize the line. In some configurations, the delivery conduit 236 may connect to only one of the portions of the pre-rinse unit 114 while the other portion can be plugged to reduce or eliminate the likelihood of the grey water contaminating a fresh water supply and to reduce the eliminate the likelihood that the pump 230 cannot pressurize the delivery conduit 236.

The tank 156 can be provided with water condition sensing components if desired. For example, in the illustrated configuration, a water temperature sensor 240 can be provided. The water temperature can be sensed in any suitable manner. In some configurations, the water temperature can be sensed using a thermometer. In addition, in some configurations, a water PH sensor 242 can be provided. The water PH sensor also can have any suitable configuration. In some configurations, the tank 156 can be provided with a port to include a PH tester, which could possibly be a dipper rod that enters the tank 156 through the top 160. Water PH often will be monitored in conjunction with warewashing machines. Typically, water PH is sensed using test strips in the food service industry. The water PH sensor 242 can be an electric PH sensor or the like and can be used to provide an indication of the water PH without the need for repeated testing of PH using the expensive PH test strips. In some configurations, one or more of the temperature and PH can be simply indicated in a go-no go style while, in other configurations, relative values can be provided. For example, a PH of less than 13 is desired and can be indicated by a first color indicator while a PH exceeding that value can be indicated by a second color indicator. In some configurations, a PH of less than 10 is achieved. The PH can be monitored for many reasons, including monitoring for levels that can shorten the life of certain components of the auxiliary device 150. Ports 244, 266 for the sensors can be provided through one or more walls of the tank 156. Any suitable placement and number of ports can be provided.

### Method of Installation

As discussed above, certain features, aspects and advantages of the present invention relate to the auxiliary device 150 being arranged and configured for installation without significant modification to the warewashing machine 104. As used herein, "without significant modification" means that the changes are easily reversible (e.g., reversing the changes does not require the use of a welder). For example, simply removing a scrap trap is easily reversible and simply redirecting a conduit through plumbing is easily reversible. On the other hand, a modification that requires a welding device, a saw, a grinder or the like is not easily reversible.

As such, one method of installation provides a simple connection. The inlet 126 to the pre-rinse unit 114 can be disconnected from the hot and cold water faucets 122, 124. The auxiliary device 150 can be moved into position proximate the warewashing station 100. The auxiliary device 150 can be located such that the drain outlet 140 from the warewashing machine 104 empties into the inlet into the tank 156 (e.g., empties into the fine scrap trap 172) or the auxiliary device 150 can be located such that the outlet 134 empties into the inlet into the tank 156. In some techniques, a delivery conduit can be provided to transport the flow from the outlet 156 to the inlet and into the tank 156.

The inlet 126 of the pre-rinse unit 114 can be connected to the delivery conduit 236. The fresh water supply assembly 210 can be connected to a source of water, such as one or both of the hot and cold water faucets 122, 124. The outlet conduit 202 of the overflow outlet 200 can be positioned over a floor sink or floor drain. The pump 230 can be connected to an electrical supply. With these very few connections made, the tank 156 can be primed using the fresh water supply assembly 210 and then operations can commence using the grey water captured from the warewashing machine 104 beginning with the second cycle.

At the end of operations (e.g., the end of the work day), the contents of the tank 156 can be drained through the pre-rinse unit 114 and/or the spigot 226. Once drained, the auxiliary device 150 can be moved out from beneath the warewashing station 100 to allow cleaning beneath that warewashing station 100. In addition, the fine scrap trap 172 can be removed from the opening 174. The opening 174 advantageously can be sized and configured to allow an operator to reach inside of the tank 156 to dry and clean the inside of the tank 156. Moreover, the opening 174 can be configured to allow visual confirmation that the tank 156 has been cleaned and dried.

In use, the auxiliary device 150 can save water as well as gas and/or electricity. First, by capturing the grey water from the commercial warewashing machine, the auxiliary device 150 significantly decreases the amount of water used in the warewashing process. In addition, because fresh water is not being used by the pre-rinse station, the fresh water need not be heated, which saves gas and/or electricity that would be used to heat the fresh water supply. Because the grey water has a sufficiently elevated temperature for pre-rinsing, the grey water does not require further heating. The savings for a commercial food service facility can easily exceed $55,000 per year.

Although the present invention has been described in terms of a certain embodiment, other embodiments apparent to those of ordinary skill in the art also are within the scope of this invention. Thus, various changes and modifications may be made without departing from the scope of the invention. For instance, various components may be repositioned as desired. Moreover, not all of the features, aspects and advantages are necessarily required to practice the present invention. Accordingly, the scope of the present invention is intended to be defined only by the claims that follow.

## Claims

1. A warewashing station (100) comprising a warewashing machine (104) and an auxiliary grey water supply device (150) for use in a commercial food service facility, the auxiliary grey water supply device comprising:
a tank (156) comprising:
a top surface (160),
an inlet comprising an opening (174) in the top surface (160) of the tank (156),
a removable scrap trap (172) received in the opening (174),
an overflow outlet (204), and
a freshwater supply, wherein the overflow outlet (204) is vertically lower than a fresh water supply inlet,
a pump (230) having an inlet in fluid communication with the tank and an outlet in fluid communication with a delivery conduit (236),
wherein the tank (156) of the auxiliary grey water supply device (150) is positioned under at least a portion of the warewashing machine (104) and is fluidly connected to the warewashing machine through an air gap, the air gap disposed between a water outlet (134) of the warewashing machine and the inlet into the auxiliary grey water supply device, the air gap being defined between the water outlet (134) of the warewashing machine and the inlet into the auxiliary device with no physical components interposed therebetween.

2. The station of Claim 1, wherein the removable scrap trap (172) comprises a bottom surface, the bottom surface being vertically lower than an upper inner wall of the tank when the removable scrap trap is positioned within the inlet.

3. The station of Claim 2, wherein the bottom surface (186) of the removable scrap trap (172) is vertically higher than a lowermost portion of the overflow outlet (204) such that a maximum water level defined by the overflow outlet is vertically lower than the bottom surface of the removable scrap trap.

4. The station of Claim 1, wherein the tank (156) further comprises an evacuation outlet (224), the evacuation outlet being disposed along a lower portion of the tank.

5. The station of Claim 4, wherein the evacuation outlet (224) is in fluid communication with a spigot (226) whereby flow through the evacuation outlet can be controlled with the spigot.

6. The station of Claim 1 further comprising at least one supporting member (192).

7. The station of Claim 6, wherein the supporting member (192) is a rail that is adapted to be supported under a component of the warewashing station.

8. The station of Claim 1 further comprising a fresh water supply assembly (210) in fluid communication with a cavity defined by the tank.

9. The station of Claim 1, wherein the tank (156) comprises a temperature sensor (240) that is adapted to sense a temperature of contents of the tank.

10. The station of Claim 1, wherein the tank comprises a PH sensor (242) that is adapted to sense a PH of contents of the tank.

11. A method of installing an auxiliary grey water supply device (150) in a commercial food service facility comprising a warewashing station (100):
the auxiliary grey water supply device comprising:
a tank (156), the tank comprising
a top surface (160),
an inlet comprising an opening (174) in the top surface (160) of the tank (156),
a removable scrap trap (172) received in the opening (174), and
an overflow outlet (204), and
a pump (230) having an inlet in fluid communication with the tank and an outlet in fluid communication with a delivery conduit (236),
the method comprising:
disconnecting a pre-rinse unit (114) from a hot water faucet and a cold water faucet,
locating the auxiliary grey water supply device (150) under the warewashing station,
connecting a delivery conduit to the hot water faucet and the cold water faucet,
positioning the inlet (174) of the auxiliary grey water supply device vertically below a water outlet (134) from a warewashing machine (104) of the warewashing station, fluidly connecting the auxiliary grey water supply device to the warewashing machine through an air gap, the air gap disposed between the water outlet (134) of the warewashing machine and the inlet into the auxiliary grey water supply device, the air gap being defined between the outlet of the warewashing machine and the inlet into the auxiliary device with no physical components interposed therebetween, and
capturing with the tank (156) of the auxiliary grey water supply device, substantially all of a load of grey water being evacuated from the warewashing machine through the inlet of the auxiliary grey water supply device without significant modification of the warewashing machine.

12. The method of Claim 11 further comprising connecting a fresh water supply to a fresh water supply assembly (210) of the auxiliary grey water supply device.

13. The method of Claim 11 further comprising plumbing an outlet conduit (202) of an overflow outlet of the auxiliary grey water supply device to a location vertically above a floor drain or a floor sink.

14. The method of Claim 11 further comprising connecting a pump (230) of the auxiliary grey water supply device to an electrical outlet.

## Patentansprüche

1. Eine Spülstation (100), die eine Spülmaschine (104) und eine Hilfszufuhreinrichtung (150) für Grauwasser zur Verwendung in einem gewerblichen Lebensmittelbetrieb beinhaltet, wobei die Hilfszufuhreinrichtung für Grauwasser Folgendes beinhaltet:
einen Tank (156), der Folgendes beinhaltet:
eine obere Oberfläche (160),
einen Einlass, der eine Öffnung (174) in der oberen Oberfläche (160) des Tanks (156) beinhaltet,
einen entfernbaren Abfallfänger (172), der in der Öffnung (174) aufgenommen wird, und
einen Überlaufauslass (204), und
eine Frischwasserzufuhr, wobei der Überlaufauslass (204) vertikal niedriger als ein Frischwasserzufuhreinlass ist,
eine Pumpe (230) mit einem Einlass in Fluidkommunikation mit dem Tank und einem Auslass in Fluidkommunikation mit einer Zufuhrleitung (236),
wobei der Tank (156) der Hilfszufuhreinrichtung (150) für Grauwasser (150) unter mindestens einem Abschnitt der Spülmaschine (104) positioniert ist und durch einen Luftspalt fluidisch mit der Spülmaschine verbunden ist, wobei der Luftspalt zwischen einem Wasserauslass (134) der Spülmaschine und dem Einlass in die Hilfszufuhreinrichtung für Grauwasser angeordnet ist, wobei der Luftspalt zwischen dem Wasserauslass (134) der Spülmaschine und dem Einlass in die Hilfseinrichtung definiert ist, ohne dass physische Komponenten dazwischen eingefügt sind.

2. Station gemäß Anspruch 1, wobei der entfernbare Abfallfänger (172) eine untere Oberfläche beinhaltet, wobei die untere Oberfläche vertikal niedriger als eine obere innere Wand des Tanks ist, wenn der entfernbare Abfallfänger innerhalb des Einlasses positioniert ist.

3. Station gemäß Anspruch 2,
wobei die untere Oberfläche (186) des entfernbaren Abfallfängers (172) vertikal höher als ein unterster Abschnitt des Überlaufauslasses (204) ist, sodass ein maximaler Wasserstand, der durch den Überlaufauslass definiert wird, vertikal niedriger als die untere Oberfläche des entfernbaren Abfallfängers ist.

4. Station gemäß Anspruch 1, wobei der Tank (156) ferner einen Evakuierungsauslass (224) beinhaltet, wobei der Evakuierungsauslass entlang einem unteren Abschnitt des Tanks angeordnet ist.

5. Station gemäß Anspruch 4,
wobei der Evakuierungsauslass (224) in Fluidkommunikation mit einem Zapfen (226) steht, wobei der Fluss durch den Evakuierungsauslass mit dem Zapfen gesteuert werden kann.

6. Station gemäß Anspruch 1, die ferner mindestens ein Stützelement (192) beinhaltet.

7. Station gemäß Anspruch 6,
wobei das Stützelement (192) eine Schiene ist, die angepasst ist, um unter einer Komponente der Spülstation gestützt zu werden.

8. Station gemäß Anspruch 1, die ferner eine Frischwasserzufuhranordnung (210) in Fluidkommunikation mit einem Hohlraum beinhaltet, der durch den Tank definiert ist.

9. Station gemäß Anspruch 1, wobei der Tank (156) einen Temperatursensor (240) beinhaltet, der angepasst ist, um eine Temperatur von Inhalten des Tanks wahrzunehmen.

10. Station gemäß Anspruch 1, wobei der Tank einen pH-Sensor (242) beinhaltet, der angepasst ist, um einen pH-Wert von Inhalten des Tanks wahrzunehmen.

11. Ein Verfahren zum Installieren einer Hilfszufuhreinrichtung (150) für Grauwasser in einem gewerblichen Lebensmittelbetrieb, der eine Spülstation (100) beinhaltet; wobei die Hilfszufuhreinrichtung für Grauwasser Folgendes beinhaltet:
einen Tank (156), wobei der Tank eine obere Oberfläche (160), einen Einlass,
der eine Öffnung (174) in der oberen Oberfläche (160) des Tanks (156) beinhaltet,
einen entfernbaren Abfallfänger (172), der in der Öffnung (174) aufgenommen wird, und
einen Überlaufauslass (204) beinhaltet, und
eine Pumpe (230) mit einem Einlass in Fluidkommunikation mit dem Tank und einem Auslass in Fluidkommunikation mit einer Zufuhrleitung (236),
wobei das Verfahren Folgendes beinhaltet:
Trennen einer Vorspüleinheit (114) von einem Heißwasserhahn und einem Kaltwasserhahn,
Platzieren der Hilfszufuhreinrichtung (150) für Grauwasser unter der Spülstation, Verbinden einer Zufuhrleitung mit dem Heißwasserhahn und dem Kaltwasserhahn,
Positionieren des Einlasses (174) der Hilfszufuhreinrichtung für Grauwasser vertikal unter einem Wasserauslass (134) von einer Spülmaschine (104) der Spülstation,
fluidisches Verbinden der Hilfszufuhreinrichtung für Grauwasser mit der Spülmaschine durch einen Luftspalt, wobei der Luftspalt zwischen dem Wasserauslass (134) der Spülmaschine und dem Einlass in die Hilfszufuhreinrichtung für Grauwasser angeordnet ist,
wobei der Luftspalt zwischen dem Auslass der Spülmaschine und dem Einlass in die Hilfsvorrichtung definiert ist, ohne dass physische Komponenten dazwischen eingefügt sind, und
Erfassen, mit dem Tank (156) der Hilfszufuhreinrichtung für Grauwasser, im Wesentlichen der gesamten Last von Grauwasser, die von der Spülmaschine durch den Einlass der Hilfszufuhreinrichtung für Grauwasser ohne signifikante Modifizierung der Spülmaschine evakuiert wird.

12. Verfahren gemäß Anspruch 11, das ferner das Verbinden einer Frischwasserzufuhr mit einer Frischwasserzufuhranordnung (210) der Hilfszufuhreinrichtung für Grauwasser beinhaltet.

13. Verfahren gemäß Anspruch 11,
das ferner das Installieren einer Auslassleitung (202) eines Überlaufauslasses der Hilfszufuhreinrichtung für Grauwasser mit einer Position vertikal über einem Bodenablauf oder einem Bodenbecken beinhaltet.

14. Verfahren gemäß Anspruch 11,
das ferner das Verbinden einer Pumpe (230) der Hilfszufuhreinrichtung für Grauwasser mit einem elektrischen Ausgang beinhaltet.

## Revendications

1. Une station à laver la vaisselle (100) comprenant une machine à laver la vaisselle (104) et un dispositif auxiliaire d'alimentation en eau grise (150) pour une utilisation dans un établissement commercial de services alimentaires, le dispositif auxiliaire d'alimentation en eau grise comprenant :
un réservoir (156) comprenant :
une surface de dessus (160),
une entrée comprenant une ouverture (174) dans la surface de dessus (160) du réservoir (156),
un piège à déchets amovible (172) reçu dans l'ouverture (174),
une sortie de trop-plein (204), et
une alimentation en eau douce, où la sortie de trop-plein (204) est
verticalement plus basse qu'une entrée d'alimentation en eau douce,
une pompe (230) ayant une entrée en communication fluidique avec le réservoir et une sortie en communication fluidique avec un conduit de distribution (236), où le réservoir (156) du dispositif auxiliaire d'alimentation en eau grise (150) est positionné sous au moins une portion de la machine à laver la vaisselle (104) et est connecté fluidiquement à la machine à laver la vaisselle à travers un espace d'air, l'espace d'air étant disposé entre une sortie d'eau (134) de la machine à laver la vaisselle et l'entrée dans le dispositif auxiliaire d'alimentation en eau grise, l'espace d'air étant défini entre la sortie d'eau (134) de la machine à laver la vaisselle et l'entrée dans le dispositif auxiliaire sans aucun composant physique interposé entre elles.

2. La station de la revendication 1, où le piège à déchets amovible (172) comprend une surface de dessous, la surface de dessous étant verticalement plus basse qu'une paroi interne supérieure du réservoir lorsque le piège à déchets amovible est positionné à l'intérieur de l'entrée.

3. La station de la revendication 2,
où la surface de dessous (186) du piège à déchets amovible (172) est verticalement plus haute qu'une partie la plus basse de la sortie de trop-plein (204) de sorte qu'un niveau d'eau maximum défini par la sortie de trop-plein est verticalement plus bas que la surface de dessous du piège à déchets amovible.

4. La station de la revendication 1, où le réservoir (156) comprend en outre une sortie d'évacuation (224), la sortie d'évacuation étant disposée le long d'une portion inférieure du réservoir.

5. La station de la revendication 4,
où la sortie d'évacuation (224) est en communication fluidique avec une vanne (226), l'écoulement à travers la sortie d'évacuation pouvant être commandé avec la vanne.

6. La station de la revendication 1 comprenant en outre au moins un élément de support (192).

7. La station de la revendication 6,
où l'élément de support (192) est un rail qui est conçu pour être supporté sous un composant de la station à laver la vaisselle.

8. La station de la revendication 1 comprenant en outre un ensemble d'alimentation en eau douce (210) en communication fluidique avec une cavité définie par le réservoir.

9. La station de la revendication 1, où le réservoir (156) comprend un capteur de température (240) qui est conçu pour détecter une température de contenus du réservoir.

10. La station de la revendication 1, où le réservoir comprend un capteur de pH (242) qui est conçu pour détecter un pH de contenus du réservoir.

11. Un procédé d'installation d'un dispositif auxiliaire d'alimentation en eau grise (150) dans un établissement commercial de services alimentaires comprenant une station à laver la vaisselle (100) :
le dispositif auxiliaire d'alimentation en eau grise comprenant :
un réservoir (156), le réservoir comprenant une surface de dessus (160), une entrée comprenant une ouverture (174) dans la surface de dessus (160) du réservoir (156),
un piège à déchets amovible (172) reçu dans l'ouverture (174), et
une sortie de trop-plein (204), et
une pompe (230) ayant une entrée en communication fluidique avec le réservoir et une sortie en communication fluidique avec un conduit de distribution (236),
le procédé comprenant :
la déconnexion d'une unité de pré-rinçage (114) d'un robinet d'eau chaude et
d'un robinet d'eau froide,
la mise en place du dispositif auxiliaire d'alimentation en eau grise (150) sous la station à laver la vaisselle,
la connexion d'un conduit de distribution au robinet d'eau chaude et au robinet d'eau froide,
le positionnement de l'entrée (174) du dispositif auxiliaire d'alimentation en eau grise verticalement au-dessous d'une sortie d'eau (134) provenant d'une machine à laver la vaisselle (104) de la station à laver la vaisselle,
la connexion fluidique du dispositif auxiliaire d'alimentation en eau grise à la machine à laver la vaisselle à travers un espace d'air, l'espace d'air étant disposé entre la sortie d'eau (134) de la machine à laver la vaisselle et l'entrée dans le dispositif auxiliaire d'alimentation en eau grise,
l'espace d'air étant défini entre la sortie de la machine à laver la vaisselle et l'entrée dans le dispositif auxiliaire sans aucun composant physique interposé entre elles, et
la capture avec le réservoir (156) du dispositif auxiliaire d'alimentation en eau grise, substantiellement de la totalité d'une charge d'eau grise étant évacuée depuis la machine à laver la vaisselle à travers l'entrée du dispositif auxiliaire d'alimentation en eau grise sans modification significative de la machine à laver la vaisselle.

12. Le procédé de la revendication 11 comprenant en outre la connexion d'une alimentation en eau douce à un ensemble d'alimentation en eau douce (210) du dispositif auxiliaire d'alimentation en eau grise.

13. Le procédé de la revendication 11
comprenant en outre le raccordement d'un conduit de sortie (202) d'une sortie de trop-plein du dispositif auxiliaire d'alimentation en eau grise à un emplacement verticalement au-dessus d'un drain de plancher ou d'un évier de plancher.

14. Le procédé de la revendication 11
comprenant en outre la connexion d'une pompe (230) du dispositif auxiliaire d'alimentation en eau grise à une prise électrique.
